Europäisches Patentamt

European Patent Office

Office européen des brevets

(19)

(11) Publication number: **0 317 198**
**A2**

## (12) EUROPEAN PATENT APPLICATION

(21) Application number: 88310649.4

(22) Date of filing: 11.11.88

(51) Int. Cl.⁴: **B65G 47/32 , B65G 47/68 , B65G 47/71 , B65G 47/51 , B65B 35/50 , B65B 23/12**

(30) Priority: 19.11.87 GB 8727117

(43) Date of publication of application:
24.05.89 Bulletin 89/21

(84) Designated Contracting States:
AT BE CH DE ES FR GB GR IT LI LU NL SE

(71) Applicant: OMNITECH (EUROPE) LIMITED Unit 21
Aylesbury Vale Ind. Park Farmbrough Close
Stocklake Aylesbury Bucks. HP20 1DQ(GB)

(72) Inventor: Barker, Michael John
3 Carrington Place
Tring Hertfordshire(GB)

(74) Representative: Arthur, Bryan Edward et al
Withers & Rogers 4. Dyer's Buildings Holborn
London EC1N 2JT(GB)

(54) Packaging systems and packaging processes.

(57) This invention relates to apparatus for providing lines of products at preselected times across the path of flow of products in a packaging system, the apparatus comprising barrier means (3) across the path of oncoming products to provide a line of products across the path, and pusher means to move lines of products past the barrier means at selected times. The barrier means comprises a stationary, elongate member, perpendicular to the direction of flow (A) to form a straight line of products and disposed sequentially between a pair of infeed conveyors (4). Also disclosed is a series of parallel endless belt conveyors (7) followed by further upstanding conveyor means (9), (9'), (9") disposed in the path of flow to admit thereto products from each oncoming line across the path of flow in sequence across the path of flow and to convey the products in said sequence across the path of flow such that one or more lines ($L_2$) of products are formed in or generally in the direction of flow (A). Another feature is computer-controlled gate and counting means (10) for dividing the one or more lines of products in or generally in the direction of flow (A) into a plurality of lines $L_3$, $L_3'$, $L_4$, $L_4'$, $L_4''$, $L4'''$ of products in or generally in the direction of flow.

Fig.1.

## PACKAGING SYSTEMS AND PACKAGING PROCESSES

This invention relates to packaging systems and packaging processes in which single articles, such as food products, are supplied in batches for wrapping. Such articles are usually but not always of identical shape and size.

Conventionally biscuits are packaged in horizontal packaging systems which rapidly produce successive approximately straight lines of biscuits perpendicular to the direction of flow. The biscuits in corresponding positions in each of a number of successive lines go into the same pack. Hence, any pack consists of the nth biscuit across each of m lines, so each pack has a sequential charge of m nth biscuits. However, especially with biscuits which are fabricated composites, there tends to be a non-uniform weight distribution across each line of biscuits, which is the same or similar for each successive line. This results in a considerable variation in pack weights, which is not very commercially satisfactory since it is often necessary to comply with minimum weight regulations.

Also, conventional systems are mechanically cumbersome and not easily adaptable to different performance requirements, for instance in respect of the number of biscuits per pack.

It is an object of the invention to overcome these disadvantages. It is desirable, furthermore, to produce packs as quickly as possible but without at the same time damaging the items during the packaging.

There are provided several different aspects of the invention which may be very effectively employed alone but which, when some or all are employed in combination, provide a highly effective, accurately controllable and adjustable packaging system and process. These aspects will now be described.

The lines of products which are infed are approximately regularly spaced and the products themselves form an approximately straight line.

According to a first aspect of the invention there is provided apparatus for providing lines of products at preselected times across the path of flow of products in a packaging system, the apparatus comprising barrier means across the path of oncoming products to provide a line of products across the path, and means to move lines of products past the barrier means at preselected times.

There is also provided a process for providing lines of products at preselected times across the path of flow of products in a packaging system, including interposing barrier means across the path of oncoming products to provide a straight line of products across the path, and moving lines of products past the barrier means at preselected times.

In a preferred arrangement the barrier means comprises a stationary, elongate member perpendicular to the direction of flow to form a straight line of products and disposed between a pair of infeed conveyors, and the means to move lines of products comprises a cylical pusher.

This apparatus may advantageously be employed to produce regularly spaced lines of products in one or more infeed locations of a packaging system. A said stationary, elongate member can be advantageously disposed in the path of products between successive belts so that it occupies the space therebetween in order to prevent products from falling through any space resulting from bending of a belt drive shaft.

The precise control of the spacing between the lines of products and hence timing of lines being transported on belt infeeds allows greater control of the supply of products to the packaging station and hence also of the packaging stage itself.

In a preferred process the line-spacing stage is followed by a product-spacing stage in which preselected spacing between products in each line are obtained, to admit of even more precise control of the products throughout the system. One or more further sets of said line-spacing apparatus may be employed downstream of the first in order to ensure that a required line-spacing is maintained.

The problems arising from packaging products occupying corresponding position in successive lines have been mentioned above.

According to a second aspect of this invention, there is provided a packaging process including supplying products in lines across the path of flow, followed by producing one or more lines of products in or generally in the direction of flow. This allows batches of products from the one or more lines to be packaged without the problem of constant weight variation. The products can also be given preselected gaps which affords individual control of products.

The one or more parallel lines of products are preferably produced by admitting products, from each oncoming line across the path of flow in sequence across the path of flow, to conveyor means and conveying the products in said sequence across the path of flow such that said one or more lines of products are formed in the direction of flow. Preferably, a line of products perpendicular to the direction of flow is acted on to impart a gradual change in product speed in the direction of flow across the line of products. More preferably, a diagonal or generally diagonal line of products is formed across the path of flow.

Apparatus for carrying out this process is also provided according to the invention. The apparatus for producing the or each line in the direction of flow may comprise a series of parallel endless belt conveyors running at successively reduced speeds in the direction of flow, followed by conveyor means disposed in the path of flow to admit thereto products from each oncoming line across the path of flow in sequence across the path of flow and to convey the products in said sequence across the path of flow such that one or more lines of products is formed in or generally in the direction of flow.

This apparatus may comprise upstanding conveyor means for acting on the side of the products and preferably comprises one or more upstanding endless belts. Such belts effectively convey products without imparting motion of products relative thereto, e.g. spinning, and allow the sequence of products to be maintained. Moreover preselected gaps between adjacent products will be maintained, which is another factor towards precise control of the travel and supply of products through the packaging system. In a preferred arrangement a plurality of upstanding endless belts is disposed in a gradual curve.

The said parallel belts can be employed at preselected different relative speeds in order to introduce products thereto at desired times and convey the biscuits at certain relative speeds and gaps in order to produce the required sequence of products. The oncoming lines of products may be supplied on flat bed conveyor means to the upstanding conveyor means.

Sensors may be employed of relaying data of performance to a central computer in order to adjust the speed of any part(s) of the process in order to optimise the performance.

The above infeed stages can be undertaken at rapid speeds for example 2500 pieces per minute. Even it it may be required to still supply products at conventional rates, packaging of batches of single products cannot conventionally be carried out so fast. To assist in maximising overall packaging speed another object of the invention to is overcome this problem.

According to a third aspect of the invention there is provided a packaging process including supplying products in one or more lines which are in or generally in the direction of flow and dividing the or each line into a plurality of lines of products in or generally in the direction of flow. This may be done by counting preselected numbers of products and sending the counted products in certain different directions; this may be repeated downstream.

Thus there is also provided according to the invention apparatus including means for dividing one or more lines of products in or generally in the direction of flow into a plurality of lines of products in or generally in the direction of flow. This may comprise one or more computer-controlled gate and counting means.

A plurality of conveyors in lanes is also provided across the path of flow for the lines of products; these will be typically in parallel lanes. These conveyors and those throughout the whole system may be advantageously under the central control of a computer and monitoring system for harmonising the performances of each stage of the system in order to optimise overall performance.

Advantageously each counted batch of products can be wrapped at the wrapping station if the counted batches are preserved so that each counted batch constitutes the products of each resultant package at the end of the process. Thus, once in this third stage the products of each package can be individually controlled as a batch.

This can be done by controlling the relative speeds of a plurality of successive conveyors in each said lane under the central control of a computer and monitoring system. Typically the speed of flow of each batch will be greatly reduced during this stage. As at the same time uniform gaps between successive products can be kept and also the conveyors can be guideless, e.g. in the form of endless belt conveyors, the products will be unlikely to be damaged.

Since the supply of product batches to the packaging station for packaging in batches can be precisely controlled, the actual packaging can also be carried out with precision.

According to a fourth aspect of the invention there is provided apparatus to be disposed in a packaging system between the infeed portion of the system and the packaging station, for the regulation of supply of product batches to the packaging station, the apparatus comprising means to accommodate a plurality of infed product batches separately from one another in spatial relation to the same stretch of path of flow, and means for providing or preserving output product batches from the accommodation means. This collection allows the controlled supply of precounted product batches to the packaging station, which promotes packaging efficiency, especially in a computer-controller system with performance monitoring throughout. Thus, continuous batch output can be achieved from intermittent batch input.

The accommodation means may comprise a plurality of storage lines to allow for one line to be taking on an infed batch while a second line is discharging a batch. There is advantageously at least one further storage line which constantly allows at least one of the lines to be fully loaded and waiting for discharge. These storage lines may each be provided on a different one of a corresponding number of vertically-spaced or horizontally-spaced endless conveyors; angularly movable, cantilevered conveyor means may be provided at each end between the respective input or take-off conveyor and the vertically-spaced endless conveyors, for supply to or take off from these conveyors in a predetermined order.

The at least one further storage line may be accommodated in a housing for the controlled accumulation and storage of product batches. The housing may have batch-storing lines on an endless transport system and may include a plurality of take-on and/or take-off ports each matched to a different input/output path. The transport system is typically centrally computer-controlled. The batches may be accommodated individually on trays and the products are preferably individually accommodated in compartments of the trays.

The system may employ a plurality of said housings. The or each housing may be supplied by a plurality of infeed lanes, any of which can be selectively used to increase system flexibility. For example, if one infeed lane shuts down, all product batches can be supplied on another lane. The endless transport system inside the housing may be direction reversible, to further increase flexibility.

The above described accommodation results in a controlled reserve of product batches which further improves the flexibility of the system, and for example may be useful to accumulate batches if there is an interruption or shutdown upstream or downstream. Most conveniently a controlled constant supply of batches to the downstream packaging station can be maintained.

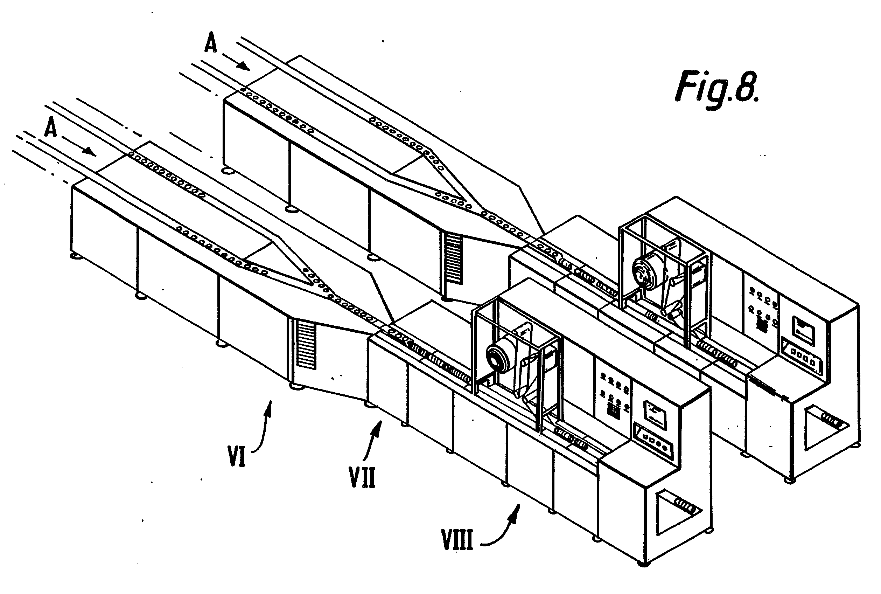

Products produced in batches using one or more of the above aspects of the invention may be wrapped by conventional packaging machinery. They would be advantageously wrapped according to the controlled wrapping portion of the horizontal system described in our co-pending European patent application published under number 0230137 A1, the contents of which are wholly incorporated herein by reference, as shown in Figure 8 herein. This may be conveniently used for wrapping products singly or multiply; the transverse seal can be made tightly, allowing savings in material and the packages to be packed into cartons without being hindered by bulky end-folds.

However, for products to be wrapped in batches, horizontally supplied products may require forming into a contiguous line of products. This needs to be carried out with efficiency comparable to that of the supply system in order to maintain product throughput and hence wrapping efficiency. It is an object of the fifth aspect of the invention to be able to achieve these aims.

According to a fifth aspect of this invention, there is provided apparatus comprising downwardly-inclined conveying means for transporting downwardly products to be wrapped in batches at a wrapping station, and means for providing or preserving products in batches of a preselected size or sizes for wrapping.

Thus, products supplied will congregate contiguously into a column upon downward flow. Products supplied to the downwardly-inclined conveying means in pre-counted batches will thus form stacks which constitute slugs to be wrapped either in this apparatus or in a wrapping station downstream. It has hitherto been known to supply, under free fall due to gravity, products which cannot be individually controlled, e.g. particulate objects such as powders and confectionery, and which typically flow into a pocket made in-situ. However, the apparatus according to the invention advantageously allows product batches to be moved under continuous control and to congregate into a stack at the same time. The apparatus can be used to stack, under control, products of any shape and texture, for example, biscuit sandwiches. Normally the apparatus would be used for stacking products of generally the same shape and size.

The means for providing batches and the downwardly-inclined conveying means may advantageously act on the same products during the same stretch of path of flow, the batch-providing means advantageously serving to maintain precounted batches. In a preferred embodiment this apparatus comprises a downwardly-inclined conveyer including regularly-spaced abutments. Since the abutments will naturally act on the leading edge of each batch, batches of length up to the distance between successive abutments are allowed to be transported.

The downward inclination may be preferably non-vertical so that products are not under completely free-fall conditions. The preferred range of the angle of inclination is 30-45° to the vertical. It is also preferred that products are conveyed upwardly to the downward conveyor.

Packaging which is conducted according to any of the aspects of the invention described above will be extremely effective, especially for food products. Biscuits, for example, can be wrapped without damage and at controlled rates to suit supply and/or demand. Highly controlled packaging will be achieved using a system in which each stage described above is electronically supervised by a central processing unit and mechanically separate as described in our aforementioned co-pending European patent application No.0230137 A1.

Embodiments of a packaging system for biscuits incorporating methods and apparatus according to the invention will now be described by way of example, with reference to the drawings in which:

Figure 1 shows a perspective three consecutive infeed stages of a packaging system;

Figure 2 shows a plan view of the first and second stages shown in Figure 1;

Figure 3 shows in detail a line-spacing apparatus employed in the first and second stages shown in Figures 1 and 2;

Figure 4 shows in more detail and in plan view the third stage shown in Figure 1;

Figure 5 shows in perspective a fourth stage, for flow-division, and a fifth stage, for speed reduction;

Figure 6 shows in more detail and in plan view the fourth stage in the packaging system;

Figure 7 shows in more detail and in plan view the fifth stage;

Figure 8, which is a continuation of Figure 5, shows in perspective the end of the system according to one embodiment of the invention, with the sixth stage, for product collection, the seventh stage, for stacking and the eighth stage, for wrapping batches of products;

Figure 9a shows a side view of a modified collection apparatus of the sixth stage;

Figure 9b shows the flow paths through the apparatus of Figure 9a in plan view;

Figure 10 shows an end view of the collection housing of Figure 9;

Figure 11 shows a side view of a modified stacking stage;

Figure 12 shows the modified stacking stage in plan view;

Figure 13 shows the modified stacking stage in perspective.

Figure 14 shows a side view of a second modified stacking stage; and

Figure 15 shows the second modified stacking stage in plan view.

A packaging system comprises eight main successive stages as follows:-

a first infeed stage (I) in which lines $L_1$, of oncoming products perpendicular to the direction of flow (A) are brought into regular spacing;

a second infeed stage (II), in which products within each line are regularly spacd and the line-spacing is maintained;

a third infeed stage (III), in which lines of products perpendicular to the direction of flow are turned through 90° to produce a line, $L_2$, of products in the direction of flow (A) by a streamer stage (IIIA) followed by a lead-off stage (IIIB);

A fourth stage (IVA), in which the line $L_2$ of products in the direction of flow is subdivided into lines $L_3$ and $L_3$, and a subsidiary stage (IVB) in which each of these lines is subdivided into a pair of Lines $L_4$ and $L_4'$, or $L_4''$ and $L_4'''$;

a fifth stage (V), in which the rate of flow of products is decreased;

a sixth stage (VI), in which product is collected in batches;

a seventh stage (VII), in which products are stacked; and

an eighth stage (VIII), in which products are wrapped.

All the stages of the biscuit packaging system are in a contiguous line and are continually monitored and synchronised by a central processing unit, in accordance with the modular principle described and claimed in our aforementioned European patent application. No. 0 230 137 A1.

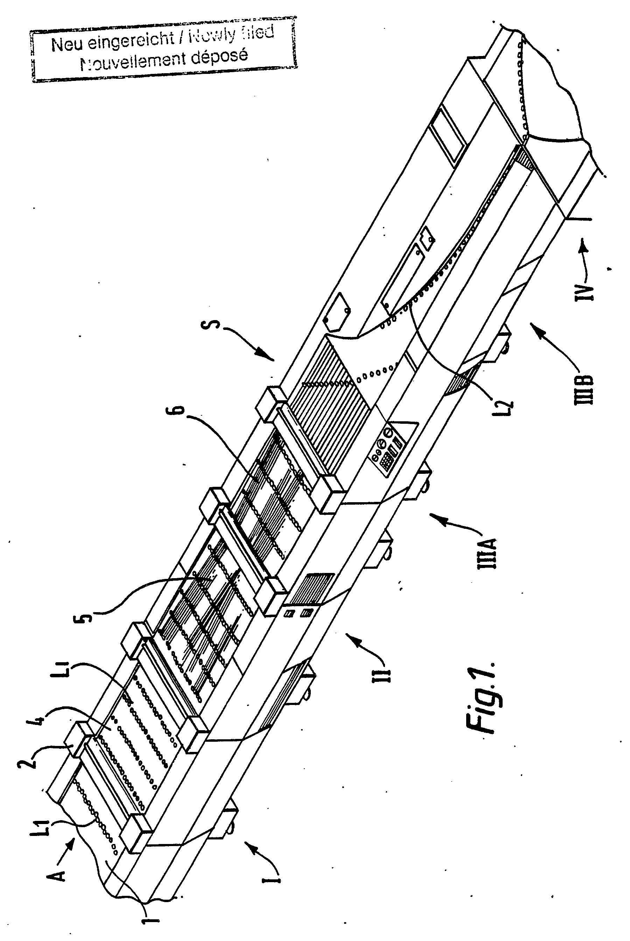

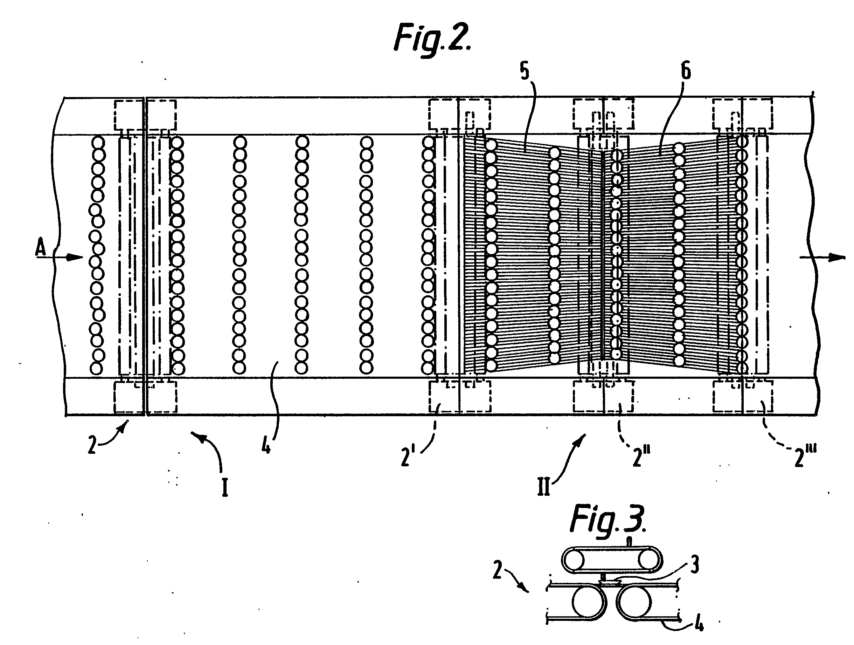

Referring to Figure 1, biscuits enter the packaging system in higgeldy-piggeldy lines $L_1$ of typically twenty biscuits across the first infeed stage flat bed endless belt conveyor (1), which is approximately 2 metres wide. Typically the number of lines transported per minute is 75 and the belt speed is 15 metres per minute. At the downstream end of the belt is an aligner (2), which consists of a stationary elongate barrier plate (3) disposed in the path perpendicular to the direction of product flow. This barrier is disposed in the space between the first stage belt conveyor and a second stage belt conveyor (4) as shown in Figure 3. An endless overhead belt supports a pusher bar which cyclically moves into, through and out of the path of products so that it moves products which are stopped by the barrier plate, and aligned thereby, over the plate and onto the second conveyor. Lines of products flowing with approximately equal spacings will depart with equal or generally equal spacings.

The stage II belt conveyor 4 is faster than the first and has a speed of about 17 metres per minute. A second aligner 2' is employed as described above to maintain the line spacing. Immediately following the second aligner 2' there is provided product-spacing apparatus, which, as shown in Figures 1 and 2, in this embodiment employs a set 5 of continuously moving, converging, adjacent, underpath conveyor belts. At the downstream end the belts are almost touching and they are at a level beneath the products which is adjustable so as to lightly act on the underneath surfaces of the biscuits to move adjacent biscuits together.

Immediately following the set of conveying belts is a third aligner 2'' as described above.

A similar set 6 of diverging underpath conveyor belts is provided immediately thereafter to move biscuits apart again to ensure a small, predetermined spacing between adjacent biscuits. Finally, a fourth aligner 2''' at the downstream end of the diverging belts ensures the regular spacing of the lines of biscuits. Thus, regularly-spaced lines of regularly- spaced biscuits are produced as a result of stages I and II of the system and typically leave stage II at a speed of 20 metres per minute.

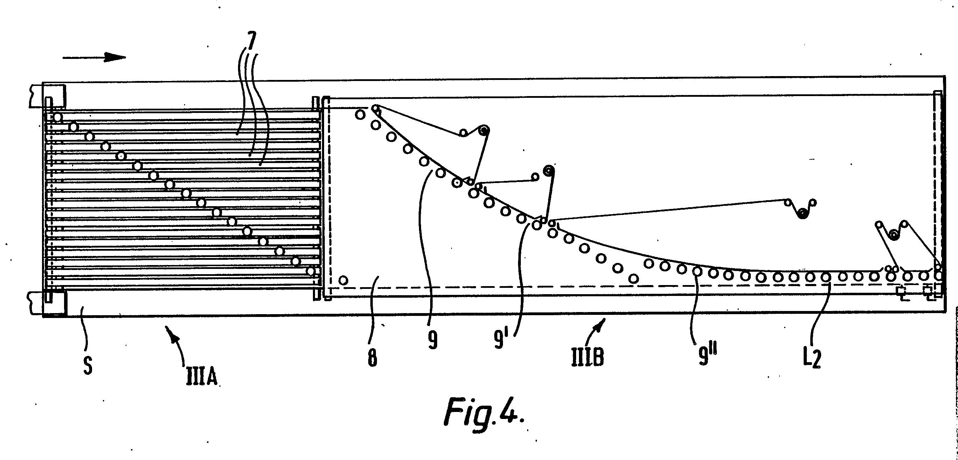

Immediately following stage II, as shown in Figures 1 and 4, is a streamer module S having a series of 18 parallel endless belt conveyors 7 running in the direction of product flow at successively reduced speeds preselected to form a diagonal line of products across the path of flow in Stage IIIA. The speeds are under the control of the central processing unit. Immediately subsequent to the streamer module is a flat bed conveyor 8 including three consecutive upstanding endless belts 9, 9', 9'', occupying a gradual curve across the path of flow to form a path for products in single file adjacent one of the long sides of the conveyor. The relative speeds of all the belts are such that products will be led off downstream by the side belts and the flat bed conveyor of Stage IIB in the same sequential order as in Stages I and II to preserve the batch format. Thus, a continuous line $L_2$ of biscuits will be formed in the direction of flow and passed downstream, all the time maintaining the individual biscuits and the batches each in sequence.

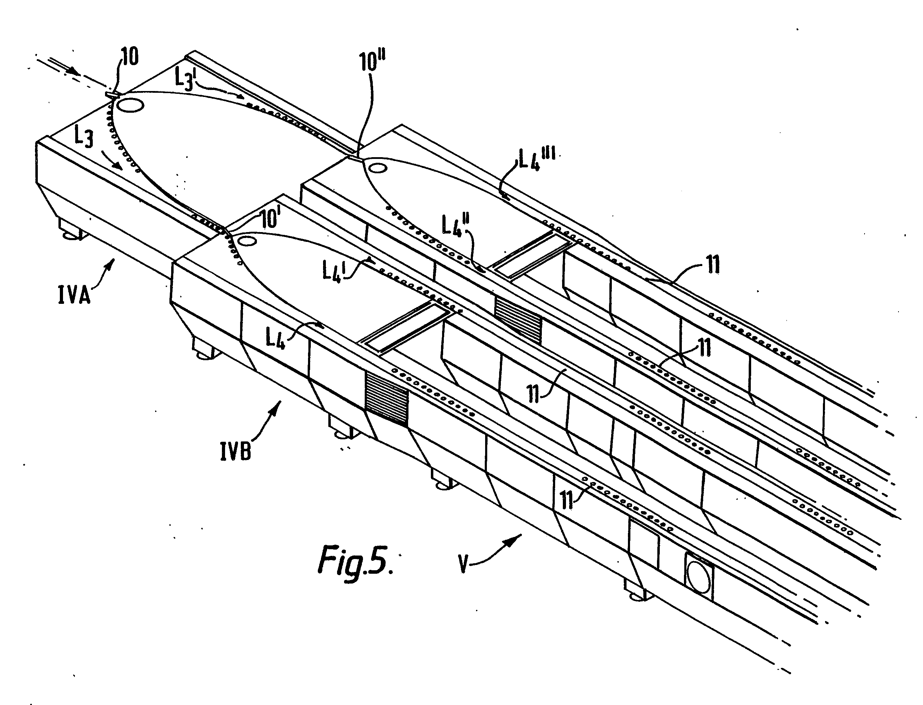

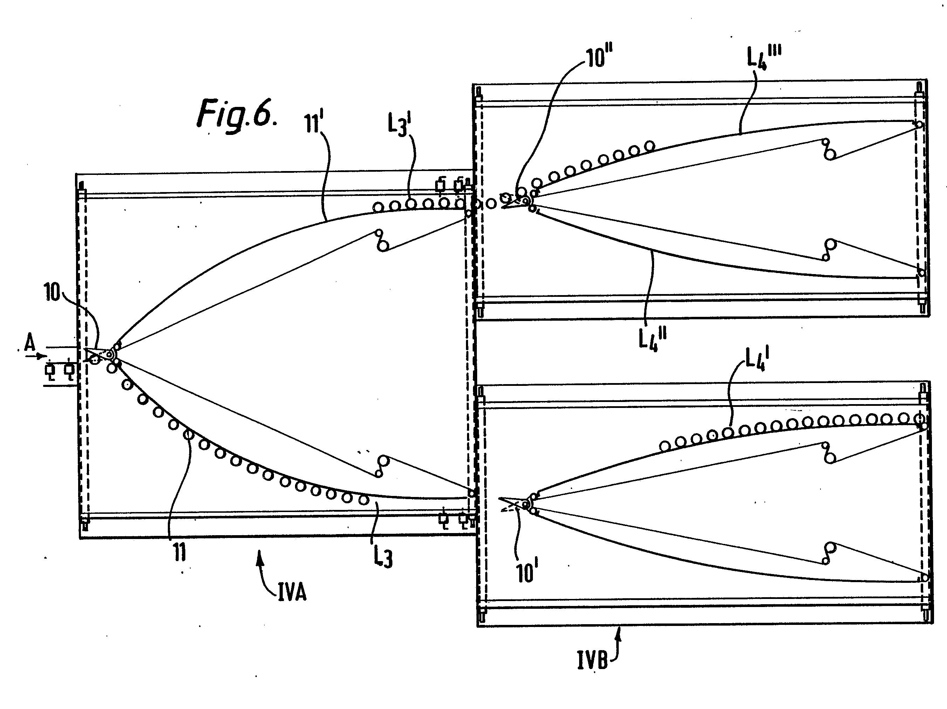

Stage IV, the next stage of the system, is best shown in Figures 5 and 6. At the upstream end, computer-controlled gate 10 is timed so as to send sequences of biscuits alternately along one of two paths in stage IVA, through which biscuits are moved by further upstanding side belts 11 and 11'. similar to those in the preceding third stage. At the gate 10 an electronic counting device (not shown) is included for counting the number of products passing by. Thus, the line of biscuits of the third stage is first divided into two. In use the gate 10 will be made to operate such that the lines are divided into consecutive batches, still preserving the batch format. The fourth stage has a second subdivision stage, IVB, in which each line from stage IVA is divided in two by another said gate 10 and counting device 10', 10''. Thus, four lines $L_4$, $L_4'$, $L_4''$, $L_4'''$, of products are usually produced in stage IVB. These will of course be produced consecutively from the one line from stage III. Alternatively, stage III could produce a plurality of lines with a plurality of streamers S.

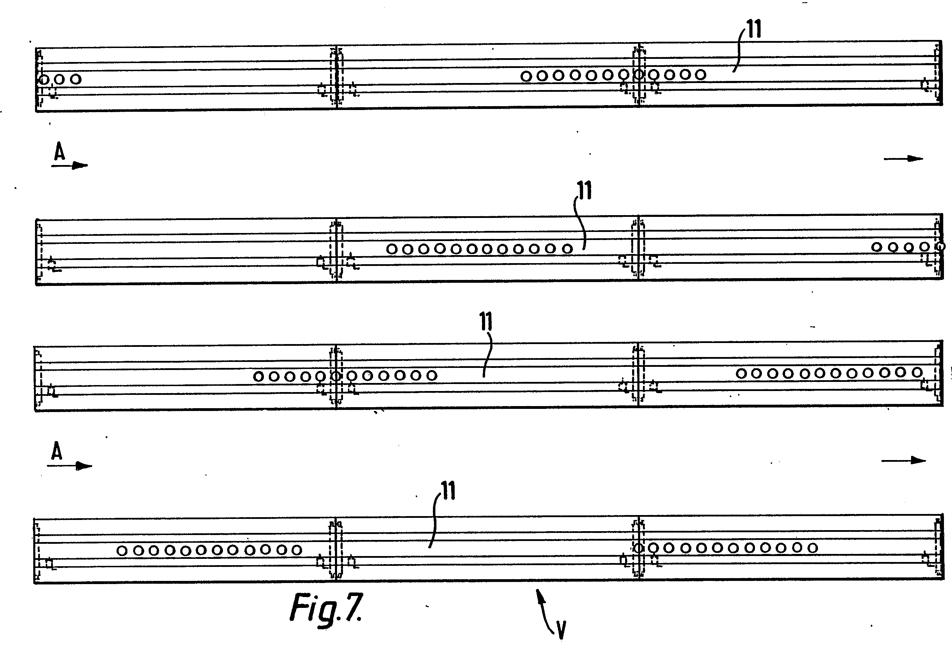

Figures 5 and 7 illustrate Stage V in which there are four lanes of travel, each provided by a plurality of successive flat bed conveyors 11. Here the transport speed of the batches of products is the conveyor speed, which may be altered once the entire batch is on the respective conveyor.

Normally the speed is reduced. For example if the incoming speed is 400 feet per minute, the discharge speed would be 100 feet per minute. Since the speed reduction is carried out when the entire batch is on a respective conveyor, the gaps between successive biscuits in each batch will be maintained.

Having obtained a preselected reduced rate of travel of product batches in Stage V, seen in Figure 5, each pair of adjacent lanes converges into a common batch collection stage VI, as shown in Figure 8. Immediately subsequently is a stacking stage VI in the form of recessed compartments of length selected to be the same as the required length of batch. Products fall into the compartments onto their ends and congregate into spaced single stacks, all the time preserving the batch and product sequence and passing the batches downstream or underpath belt conveyors.

Immediately downstream of each stacking stage is wrapping Stage VIII in which batches are individually wrapped. This may be advantageously performed in a system incorporating controlled longitudinal fin seal and transverse seal with cut-off modules as described and claimed in our aforementioned European patent application No. 0 230 137 A1. Wrapped product batches are then taken away for example for storage and sale.

The overriding advantages of the abovedescribed system are:

1) that products are produced in a precounted batch format from across the path of flow so that the formerly experienced disadvantage of batch weight variation due to each batch being taken from those products having the same relative position in a line across the path of flow in a successive plurality of lines is avoided;

2) that product batches and spaced product sequence are retained throughout so that optimum control and efficiency of batch supply are achieved; and

3) product quality is preserved because mechanical handling of products is minimised.

These advantages also accrue for the modifications now described.

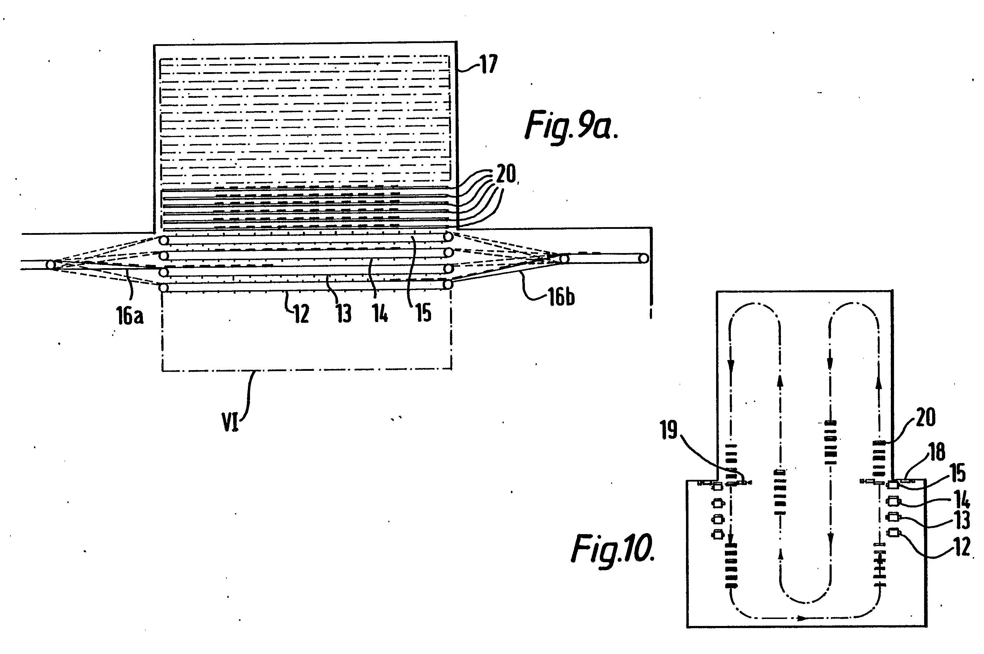

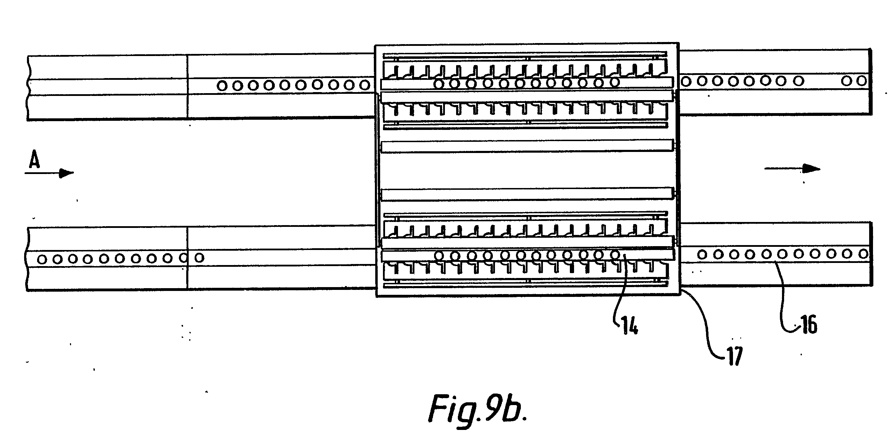

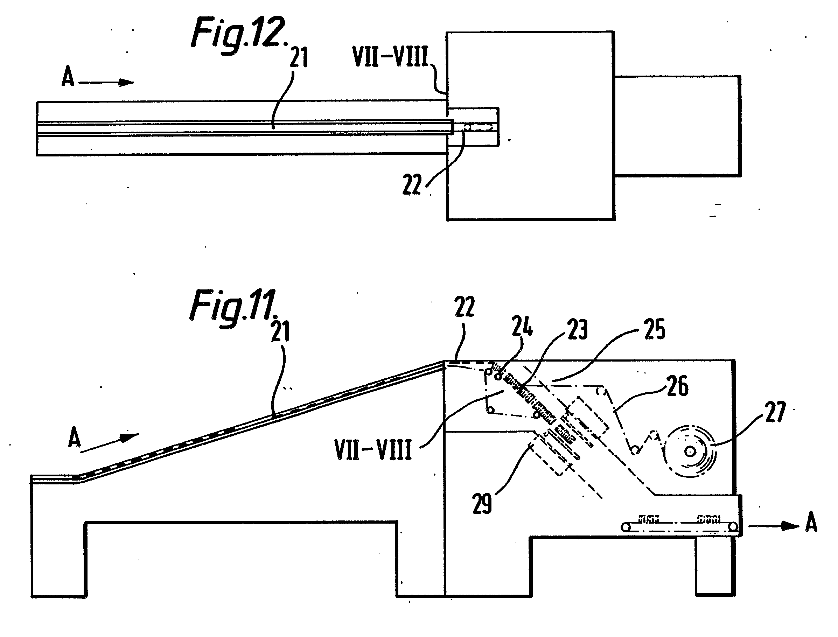

A modified collection Stage VI is shown in Figures 9a, 9b and 10. Having obtained a preselected reduced rate of travel of product batches in Stage V, the direction of flow from each pair of adjacent flow paths continues linearly through the common batch collection Stage VI. This consists of four vertically-spaced endless reception belts 12, 13, 14, 15 including regularly-spaced abutments for spacing products. The input ends of these belts communicate with the downstream end of the adjacent upstream conveyor via an angularly-movable cantilevered transfer arm 16a including an endless belt conveyor, and the output ends communicate with the upstream end of the adjacent downstream conveyor via an arm 16b of the same type as the first. The first arm 16a is angularly movable under control of the central processing unit about the upstream end of the downstream conveyor between each reception belt 12, 13, 14, 15, so that a single whole batch can be transferred from the upstream conveyor onto a selected reception belt. The second arm 16b is similarly controlled to transfer a single, whole batch from a selected reception belt onto the downstream conveyor. The reception belts are sequentially loaded and unloaded so that in normal use one is being loaded while another is being unloaded and the remaining two have been loaded.

Between each pair of adjacent flow paths is disposed a housing annex 17, which may be used when required to accumulate and store batches of biscuits to assist in regulating batch flow. Each flow path runs on either side of a reversable, endless transport system of parallel cradles 20, which each accommodate a single whole batch of spaced products, within the annex 17. Typically each alternate cradle is filled to provide a reserve for emergencies. The cradles travel through the endless path under control of the central processing unit and are aligned with the top one 15 of the reception belts for take-on and take-off of batches. This is achieved by the appropriate one of a pair of timed automatic rams 18,19 flanking the top reception belt 15. The outer ram 18 pushes the products, which are stationary on the belt, onto a cradle, when aligned with the belt, from the belt, whereas the inner ram 19 pushes products off such an aligned cradle and onto the belt, as required.

Thus, the cradles 20 can be used to maintain controlled reserve of batches when needed, for example if there is a breakdown upstream. An automatic collection sequence is instigated by the central processing unit so that intermittent supply to the reception belts is converted onto constant flow downstream. If one conveyor belt breaks down upstream, this can be compensated by running the adjacent one at twice the speed and batches taken into the housing annex 17 from this belt Batches are then taken out on both sides of the annex as usual for despatch along the usual two flow paths.

In a modification of Stage VI, a housing annex 17 may be employed for each flow path; thus annex may have a take on and off point on each side to supply downstream conveyors as described above.

In a further modification of Stage VI a housing annex 17 is not employed and reception belts 12, 13, 14, 15 above are alone used to regulate flow.

A modification of Stages VII and VIII for combined stacking/wrapping is now described with reference to Figures 11 and 12, and which is preferably but not necessarily employed with the collection stage illustrated in Figures 9a, 9b and 10. Each downstream conveyor from Stage VI leads to an uphill flat bed conveyor 21 upon which the batches of products are transported, all the time maintaining the batch and product sequence. The speed of supply of products is typically 400-500 pieces per minute.

At the top of the uphill conveyor 21 is a short level conveyor contiguous with both the upstream uphill conveyor 21 and a downstream downhill, flat bed conveyor 23, which is inclined at an angle of 30-45° to the vertical. The flat bed conveyor 23 includes regularly-spaced flights, which about the leading edge of the leading product of each incoming batch from the uphill and top conveyors 21, 22. As products leave the top conveyor 22 they fall onto their sides, the leading product of a batch resting against the next flight 24. The distance between adjacent flights is sufficient to accommodate all the products of a single batch on their sides.

Thus, the products of each incoming batch congregate contiguously into a column or slug, as they are downwardly transported on the downhill conveyor 23 through a passageway, and the slug is then immediately wrapped at wrapping station 25, with sheet material 26 from a roll 27. The speed of supply of slugs is 35-70 per minute. Longitudinal and end seals are also formed by cut-and-seal apparatus 29 while the batches are moved downhill by a further flat bed conveyor so that wrapped batches are led off on a final horizontal flat bed conveyor for storage or sale of optionally for cartoning.

In a further modification, wrapping may be conducted in a separate module to the stacking apparatus.

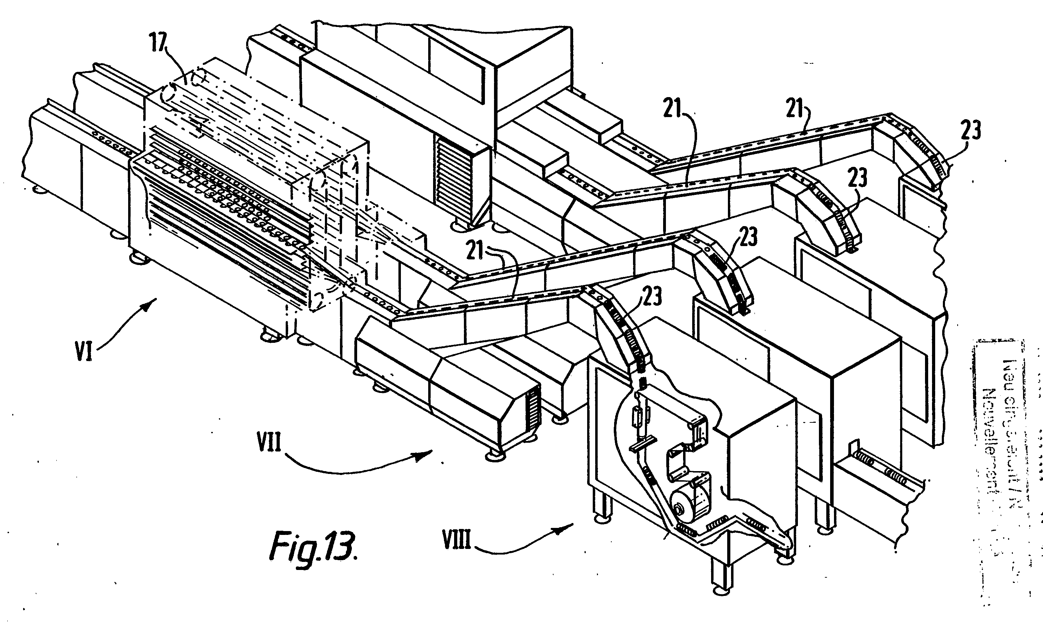

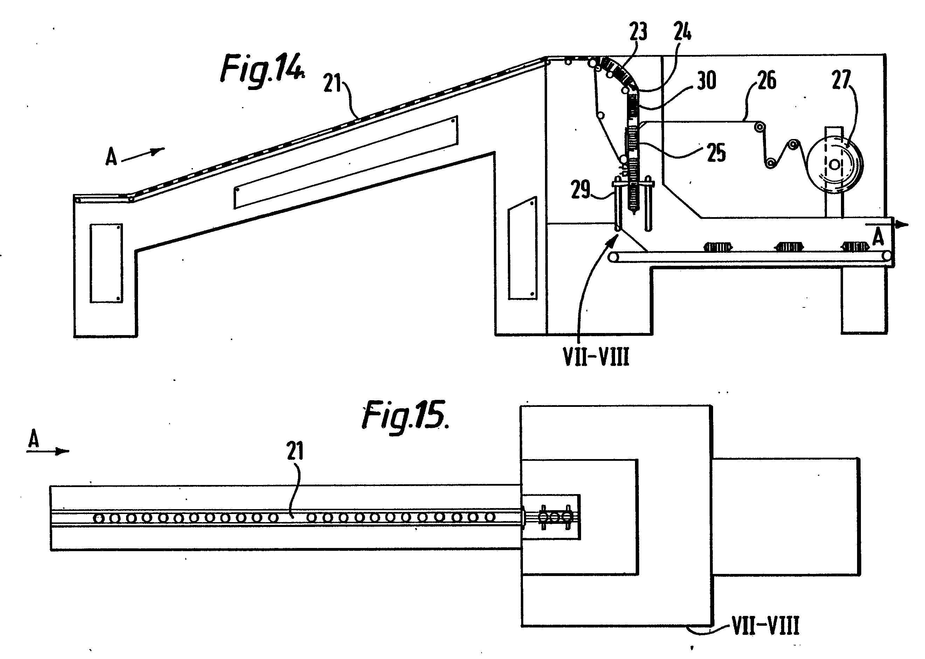

An alternative stacking/wrapping apparatus is shown in Figures 13, 14, and 15, in which a downhill conveyor 23, again including regularly-spaced flights 24, includes a partially-inclined portion followed by a vertical portion in a passageway. The conveyor 23 leads to a wrapping station 25 in which each batch is wrapped with sheet material 26 from a roll 27. Longitudinal and end seals are formed by cut-and-seal apparatus 29. The wrapped batches then fall onto a final horizontal flat bed conveyor and are led off for storage or sale or optionally for cartoning.

It should be noted that the downhill conveying allows tight end seals to be formed during wrapping, which advantageously assists in cartoning.

## Claims

1. Apparatus for providing lines of products at preselected times across the path of flow of products in a packaging system, the apparatus comprising barrier means across the path of oncoming products to provide a line of products across the path, and means to move lines of products past the barrier means at preselected times.

2. Apparatus according to claim 1, wherein the barrier means comprises a stationary, elongate member perpendicular to the direction of flow to form a straight line of products and disposed between a pair of infeed conveyors.

3. Apparatus according to claim 1 or 2, wherein the means to move lines of products comprises a cyclical pusher.

4. A process for providing lines of products at preselected times across the path of flow of products in a packaging system, including interposing barrier means across the path of oncoming products to provide a straight line of products across the path, and moving lines of products past the barrier means at preselected times.

5. A packaging process including supplying products in lines across the path of flow, followed by producing one or more lines of products in or generally in the direction of flow.

6. A process according to claim 5, wherein the one or more parallel lines of products are preferably produced by admitting products, from each oncoming line across the path of flow in sequence across the path of flow, to conveyor means and conveying the products in said sequence across the path of flow such that a single line of products is formed in the direction of flow.

7. A process according to claim 6, wherein a line of products perpendicular to the direction of flow is acted on to impart a gradual change in product speed in the direction of flow across the line of products.

8. Apparatus for carrying out a process according to claims 5, 6 or 7.

9. Apparatus according to claim 8, comprising a series of parallel endless belt conveyors followed by further conveyor means disposed in the path of flow to admit thereto products from each oncoming line across the path of flow in sequence across the path of flow and to convey the products in said sequence across the path of flow such that one or more lines of products are formed in or generally in the direction of flow.

10. Apparatus according to claim 9, wherein the further conveyor means comprises upstanding conveyor means for acting on the side of the products.

11. Apparatus according to claim 10, wherein the upstanding conveyor means comprises a plurality of upstanding endless belts disposed in a gradual curve.

12. A packaging process including supplying products in one or more lines in or generally in the direction of flow, and dividing the or each line into a plurality of lines of products in or generally in the direction of flow.

13. A process according to claim 12, comprising counting preselected numbers of products and sending the counted products in certain different directions.

14. Apparatus including means for dividing one or more lines of products in or generally in the direction of flow into a plurality of lines of products in or generally in the direction of flow.

15. Apparatus according to claim 14, comprising one or more computer-controlled gate and counting means.

16. Apparatus to be disposed in a packaging system between the infeed portion of the system and the packaging station, for the regulation of supply of product batches to the packaging station, the apparatus comprising means to accommodate a plurality of infed product batches separately from one another in spatial relation to the same stretch of path of flow, and means for providing or preserving output product batches from the accommodation means.

17. Apparatus according to claim 16, wherein the accommodation means comprises a plurality of storage lines to allow for one line to take on an infed batch and a second line to discharge a batch.

18. Apparatus according to claim 17, comprising at least one other storage line which constantly allows at least one of the lines to be fully loaded and waiting for discharge.

19. Apparatus according to claim 17, wherein the at least one other storage line is accommodated in a housing for the accumulation and storage of product batches.

20. Apparatus according to claim 19, wherein the housing has batch storing lines on an endless transport system and includes a plurality of take-on and/or take-off ports.

21. Apparatus comprising downwardly-inclined conveyor means for transporting downwardly products for wrapping, and means for providing or preserving products in batches of a preselected size or sizes for wrapping.

22. Apparatus according to claim 21, wherein the means for providing batches and the downwardly inclined conveyor means are arranged to act on the same products during the same stretch of path of flow.

23. Apparatus according to claim 21 or 22, comprising a downwardly-inclined conveyor including regularly-spaced abutments.

24. Apparatus according to claim 21, 22, or 23, wherein the downwardly-inclined conveyor means is non-vertical.

25. Apparatus according to claim 24, wherein the angle of inclination of the downwardly-inclined conveyor means is in the range 30 - 40° to the vertical.

26. Apparatus according to any one of claims 21 to 25, including upwardly-inclined conveyor means immediately or almost immediately upstream of the downwardly-inclined conveyor means.

27. A method of supplying products for wrapping, comprising transporting products downwardly for wrapping, and providing or preserving products in batches of a preselected size or sizes for wrapping.

Fig.1.

*Fig.2.*

*Fig.3.*

EP 0 317 198 A2

Fig.4.

Fig.5.

Fig.6.

EP 0 317 198 A2

EP 0 317 198 A2

**A**

**A**

**Fig.7.**

V

*Fig.8.*

Fig.9a.

Fig.10.

EP 0 317 198 A2

Fig.9b.

EP 0 317 198 A2

*Fig.12.*

A →

21

VII–VIII

22

*Fig.11.*

21

A →

22    24    23    25

26

27

VII–VIII

29

→ A

Fig.13.

Fig.14.

Fig.15.

EP 0 317 198 A2